# EUROPÄISCHE PATENTSCHRIFT

(11) **EP 3 267 857 B1**
(45) Veröffentlichungstag und Bekanntmachung des Hinweises auf die Patenterteilung: **23.01.2019**
(21) Anmeldenummer: 16705148.1
(22) Anmeldetag: 17.02.2016
(51) Int. Cl.: A47J 31/44, B67D 1/12, A47J 31/36

(54) **MIXGETRÄNKEEINHEIT**
MIXED BEVERAGE UNIT
UNITÉ DE MÉLANGE DE BOISSONS

(30) Priorität: 12.03.2015 DE 102015204452; 23.11.2015 DE 102015223031
(43) Veröffentlichungstag der Anmeldung: 17.01.2018
(73) Patentinhaber: BSH Hausgeräte GmbH, 81739 München (DE)
(72) Erfinder: REHFUSS, Evgeni, 81673 München (DE)
(86) Internationale Anmeldenummer: PCT/EP2016/053359
(87) Internationale Veröffentlichungsnummer: WO 2016/142139

(56) Entgegenhaltungen:
- EP-A1- 2 345 351
- WO-A1-2013/087996
- US-B1- 7 997 448

## Beschreibung

Die Erfindung - betrifft eine Getränkeeinheit zur Herstellung eines Getränks, wobei die Getränkeeinheit umfasst: ein erstes Bereitstellungsmodul zur Bereitstellung einer ersten Flüssigkeit; ein zweites Bereitstellungsmodul zur Bereitstellung einer zweiten Flüssigkeit, wobei die zweite Flüssigkeit Alkohol enthält; ein Geschmacksmodul zur Bereitstellung von Zusatzstoffen; wobei das Geschmacksmodul eingerichtet ist, eine erste Kapsel aufzunehmen, welche Zusatzstoffe für eine Portion eines ersten Getränks umfasst; ein Steuermodul, das eingerichtet ist, Parameter für die Herstellung des ersten Getränkes zu ermitteln, wobei die Parameter eine erste Menge an erster Flüssigkeit und eine zweite Menge an zweiter Flüssigkeit anzeigen; zu veranlassen, dass durch das erste Bereitstellungsmodul die erste Menge an erster Flüssigkeit bereitgestellt wird; zu veranlassen, dass durch das zweite Bereitstellungsmodul die zweite Menge an zweiter Flüssigkeit bereitgestellt wird; und zu veranlassen, dass die erste Menge an erster Flüssigkeit und die zweite Menge an zweiter Flüssigkeit mit den Zusatzstoffen aus der ersten Kapsel vermischt werden, um die Portion des ersten Getränks herzustellen.

Eine solche Getränkeeinheit geht hervor aus der WO 2013/087996 A1. Die dort offenbarte Getränkeeinheit ist dazu bestimmt, ein heißes, auf eine Umgebungstemperatur temperiertes oder geeistes Getränk bereitzustellen, indem mittels einer geeigneten Flüssigkeit ein in einer Kapsel bereitgestellter Stoff extrahiert wird. Diese Flüssigkeit kann aus mehreren bereitgestellten Flüssigkeiten ausgewählt sein.

In einem Haushalt werden typischerweise eine Vielzahl von unterschiedlichen alkoholischen Getränken konsumiert. Diese unterschiedlichen alkoholischen Getränke müssen einzeln bezogen und im Haushalt gelagert werden. Daher ist die Bereitstellung von unterschiedlichen alkoholischen Getränken in einem Haushalt mit einem hohen logistischen Aufwand, mit einem hohen Bedarf für Stauraum und mit hohen Kosten verbunden.

Die US 2014/0272006 A1 beschreibt ein Verfahren zur Synthese von alkoholischen Getränken.

Die WO2014/159458 A1 beschreibt ein System, mit dem alkoholische Getränke durch das Mischen von Wasser und dem Inhalt von Kapseln mit Aromastoffen und Alkohol hergestellt werden können. Durch die Maßnahmen, die in den erwähnten Dokumenten beschrieben sind, wird es ermöglicht, unterschiedliche alkoholische Getränke direkt in einem Haushalt herzustellen. Dennoch ist insbesondere die Bereitstellung von dedizierten Kapseln, welche die Aromastoffe und den Alkohol für ein alkoholisches Getränk aufweisen, weiterhin mit einem relativ hohen Aufwand verbunden.

Aus dem US-Patent 7,997,448 geht ein System zur Herstellung von Mixgetränken hervor, welche in die Tür eines Kühlschranks eingebaut ist. Das System umfasst Vorratsbehälter für Wasser, Alkohol, Sirupe oder Konzentrate und dergleichen sowie einen Prozessor und Aktuatoren, um durch Mischen von Sirup oder Konzentrat mit Wasser und gegebenenfalls Alkohol verschiedene Mixgetränke her- und bereitzustellen.

Die vorliegende Erfindung befasst sich mit der technischen Aufgabe, den Aufwand für die Bereitstellung von einer Vielzahl von unterschiedlichen alkoholischen Getränken weiter zu reduzieren.

Diese Aufgabe wird durch den Gegenstand des unabhängigen Patentanspruchs gelöst. Vorteilhafte Ausführungsformen sind in den abhängigen Patentansprüchen oder nachfolgender Beschreibung beschrieben und in der beigefügten Zeichnung dargestellt. Gemäß einem Aspekt der Erfindung wird eine Getränkeeinheit zur Herstellung eines Getränks, insbesondere eines alkoholischen Getränks, beschrieben. Die Getränkeeinheit umfasst ein erstes Bereitstellungsmodul zur Bereitstellung einer ersten Flüssigkeit. Die erste Flüssigkeit kann insbesondere Wasser umfassen. Das erste Bereitstellungsmodul kann z.B. einen Behälter für die Aufnahme der ersten Flüssigkeit umfassen. Alternativ oder ergänzend kann das erste Bereitstellungsmodul eine Leitung umfassen, über die die erste Flüssigkeit bezogen werden kann. Die Getränkeeinheit umfasst weiter ein zweites Bereitstellungsmodul zur Bereitstellung einer zweiten Flüssigkeit. Die zweite Flüssigkeit enthält dabei Alkohol (z.B. Ethanol oder einen anderen geschmacksneutralen Alkohol). Das zweite Bereitstellungsmodul kann z.B. einen Behälter für die Aufnahme der zweiten Flüssigkeit umfassen. Alternativ oder ergänzend kann das zweite Bereitstellungsmodul eine Leitung umfassen, über die die zweite Flüssigkeit bezogen werden kann. Außerdem umfasst die Getränkeeinheit ein Geschmacksmodul zur Bereitstellung von Zusatzstoffen. Dabei ist das Geschmacksmodul eingerichtet, eine erste Kapsel aufzunehmen, welche die Zusatzstoffe für eine Portion des ersten Getränks umfasst. Insbesondere kann die erste Kapsel ausschließlich Zusatzstoffe (und keinen Alkohol) umfassen. Die Zusatzstoffe können Aromastoffe, Geschmacksstoffe, Farbstoffe, Konservierungsstoffe und/oder Schwebstoffe umfassen. Über die Zusatzstoffe kann aus der ersten Flüssigkeit und/oder aus der zweiten Flüssigkeit ein Getränk mit einem bestimmten Geschmack und mit einer bestimmten äußereren Erscheinungsform hergestellt werden. Dabei kann die erste Kapsel genau die erforderliche Menge an Zusatzstoffen für genau eine Portion des ersten Getränks umfassen.

Die Getränkeeinheit umfasst einen Mischbehälter, und das erste Bereitstellungsmodul ist über ein oder mehrere erste Ventile mit dem Mischbehälter verbunden. In entsprechender Weise ist auch das zweite Bereitstellungsmodul über ein oder mehrere zweite Ventile mit dem Mischbehälter verbunden. Das Steuermodul ist eingerichtet, die ein oder mehreren ersten/zweiten Ventile anzusteuern, um die erste Menge der ersten Flüssigkeit und/oder die zweite Menge der zweiten Flüssigkeit in dem Mischbehälter bereitzustellen.

Was in diesem Zusammenhang eine Portion ist, richtet sich nach der Art und der üblichen Bereitstellung des ersten Getränks an einen Konsumenten. Eine Portion Bier kann zwischen 0,2 I und 1,0 l, insbesondere 0,2l, 0,3 l, 0,5l oder 1,0 I betragen; eine Portion Rotwein oder Weißwein 0,1 l oder 0,2 l. Eine Portion Südwein wie Portwein oder Sherry mag 50 cl betragen, eine Portion Spirituose wie Likör, Obstbranntwein, Cognac oder Whisky 20 cl oder 40 cl.

Die Getränkeeinheit umfasst weiter ein Steuermodul, das eingerichtet ist, Parameter für die Herstellung eines ersten Getränkes zu ermitteln, wobei die Parameter eine erste Menge von der ersten Flüssigkeit und eine zweite Menge von der zweiten Flüssigkeit anzeigen. Das Steuermodul ist weiter eingerichtet, zu veranlassen, dass durch das erste Bereitstellungsmodul die erste Menge an erster Flüssigkeit bereitgestellt wird, und zu veranlassen, dass durch das zweite Bereitstellungsmodul die zweite Menge an zweiter Flüssigkeit bereitgestellt wird. Außerdem ist das Steuermodul eingerichtet, zu veranlassen, dass die erste Menge an erster Flüssigkeit und die zweite Menge an zweiter Flüssigkeit mit den Zusatzstoffen aus dem Geschmacksmodul (insbesondere mit den Zusatzstoffen aus der ersten Kapsel) vermischt werden, um das erste Getränk herzustellen. Insbesondere kann aus den (gesamten) Zusatzstoffen der ersten Kapsel genau eine Portion des ersten Getränks hergestellt werden.

Die Getränkeeinheit ist somit eingerichtet, den Alkoholanteil eines Getränks separat von einer Kapsel mit Zusatzstoffen aus einem zweiten Bereitstellungsmodul zu entnehmen. Dies ermöglicht die Verwendung kompakter und kleiner Kapseln, so dass der Aufwand und insbesondere der Platzbedarf für die Herstellung alkoholischer Getränke reduziert werden kann. Des Weiteren wird durch die Bereitstellung von alkoholfreien Kapseln die Handhabung dieser Kapseln vereinfacht und sicherer (insbesondere in Bezug auf den Schutz von Minderjährigen). Außerdem ermöglicht die Verwendung von Kapseln, die die erforderliche Menge an Zusatzstoffen für genau eine Portion eines Getränks umfassen, die flexible und komfortable Herstellung eines (alkoholischen) Getränks sowie die Bereitstellung einer kompakten Getränkeeinheit.

Die erste Kapsel kann die erforderliche Menge und Mischung an Zusatzstoffen für die Herstellung des ersten Getränks umfassen. Des Weiteren können andere Kapseln bereitgestellt werden, die andere Mengen und Mischungen von Zusatzstoffen für die Herstellung anderer Getränke umfassen. Es können somit portionsweise unterschiedliche Getränke (durch Verwendung unterschiedlicher Kapseln) hergestellt werden.

Die erste Kapsel kann ein Informationsmittel umfassen, das Information bezüglich des ersten Getränks anzeigt, welches mit der ersten Kapsel hergestellt werden kann. Das Informationsmittel kann z.B. einen maschinenlesbaren Code auf der ersten Kapsel, eine Farbe der ersten Kapsel, eine Form der ersten Kapsel, und/oder eine Identifikationsnummer auf der ersten Kapsel umfassen. Das Steuermodul kann eingerichtet sein, die Parameter für die Herstellung des ersten Getränkes auf Basis von dem Informationsmittel zu ermitteln. Beispielsweise kann das Informationsmittel einen Link zu einem Eintrag in einer Datenbank bereitstellen, in der die Parameter für die Herstellung des ersten Getränks gespeichert sind. Das Steuermodul kann dann die Parameter von der Datenbank beziehen. Durch die Verwendung eines Informationsmittels kann eine einfache und zuverlässige Herstellung unterschiedlicher Getränke gewährleistet werden.

Die Getränkeeinheit kann zumindest ein Temperierungsmodul zur Temperierung (insbesondere zur Kühlung) der ersten und/oder der zweiten Flüssigkeit umfassen.

Das erste Bereitstellungsmodul kann eingerichtet sein, über ein erstes Basisventil die erste Flüssigkeit mit einer Basistemperatur und über ein erstes Ergänzungsventil die erste Flüssigkeit mit einer Ergänzungstemperatur bereitzustellen, wobei die Ergänzungstemperatur und die Basistemperatur unterschiedlich sind. Ein Temperierungsmodul der Getränkeeinheit kann z.B. eingerichtet sein, die erste Flüssigkeit auf die Basistemperatur abzukühlen. Andererseits kann es sich bei der Ergänzungstemperatur um eine Umgebungstemperatur der Getränkeeinheit handeln. Durch die Bereitstellung der ersten Flüssigkeit (und ggf. der zweiten Flüssigkeit) mit unterschiedlichen Temperaturen kann eine effiziente Temperierung eines herzustellenden Getränks bewirkt werden. Beispielsweise kann die erste Temperatur für die Herstellung des ersten Getränks die Temperatur anzeigen, mit der die erste Flüssigkeit im Mischbehälter bereitgestellt werden soll. Das Steuermodul kann eingerichtet sein, das erste Basisventil und das erste Ergänzungsventil in Abhängigkeit von der ersten Temperatur anzusteuern, so dass die erste Flüssigkeit im Mischbehälter die erste Temperatur aufweist. In entsprechender Weise kann auch die zweite Flüssigkeit mit einer Basistemperatur und einer Ergänzungstemperatur bereitgestellt werden.

Die Getränkeeinheit kann ein Kohlensäure-Modul umfassen, das eingerichtet ist, Kohlensäure (also Kohlendioxid) über ein Kohlensäure-Ventil im Mischbehälter bereitzustellen. Die Parameter für die Herstellung des ersten Getränks können eine Menge an Kohlen säure anzeigen und das Steuermodul kann eingerichtet sein, das Kohlensäure-Ventil anzusteuern, um die angezeigte Menge an Kohlensäure im Mischbehälter bereitzustellen. So können durch die Getränkeeinheit auch kohlensäurehaltige Getränke hergestellt werden.

Die Getränkeeinheit kann ein Austritts-Ventil umfassen, das den Mischbehälter mit dem Geschmacksmodul verbindet. Des Weiteren kann die Getränkeeinheit einen Aktuator umfassen, der eingerichtet ist, ein Flüssigkeitsgemisch (z.B. ein Gemisch aus erster Flüssigkeit, aus zweiter Flüssigkeit und/oder aus Kohlensäure) aus dem Mischbehälter durch das Austritts-Ventil zum Geschmacksmodul zu befördern. Beispielsweise kann das Flüssigkeits-Gemisch durch das Geschmacksmodul (insbesondere durch die erste Kapsel im Geschmacksmodul) gepresst werden, so dass das Flüssigkeits-Gemisch die Zusatzstoffe aufnimmt und so das erste Getränk gebildet wird.

Der Mischbehälter kann einen beweglichen Kolben umfassen, durch den ein Volumen des Mischbehälters vergrößert bzw. verkleinert werden kann. Der Kolben kann durch einen Aktuator (z.B. durch einen Elektromotor) angetrieben werden. Die ein oder mehreren ersten/zweiten Ventile können derart angeordnet sein, dass durch die ein oder mehreren ersten Ventile die erste Flüssigkeit bzw. durch die ein oder mehreren zweiten Ventile die zweite Flüssigkeit in den Mischbehälter gesogen wird, wenn durch den Kolben das Volumen des Mischbehälters vergrößert wird. Des Weiteren kann das Austritts-Ventil derart angeordnet sein, dass durch das Austritts-Ventil das Flüssigkeits-Gemisch aus dem Mischbehälter gedrückt wird, wenn durch den Kolben das Volumen des Mischbehälters verkleinert wird. Dabei können die ein oder mehreren ersten/zweiten Ventile und das Austritts-Ventil jeweils ein Einwegventil umfassen. Durch die Verwendung eines Kolbens kann in Kosten- und Bauraum- effizienter Weise die Herstellung eines Mischgetränks bewirkt werden.

Die Getränkeeinheit kann eine Nutzerschnittstelle (z.B. auf einem berührungsempfindlichen Bildschirm) umfassen, die es einem Nutzer ermöglicht, Parameter für die Herstellung des ersten Getränkes einzugeben. So können in Nutzer-freundlicher Weise Anpassungen bei der Herstellung eines Getränks vorgenommen werden. Insbesondere kann die zweite Menge der zweiten Flüssigkeit angepasst werden, um den Alkoholgehalt des ersten Getränks zu variieren (z.B. einen schwachen, mittleren, oder starken Alkoholgehalt). Beispielsweise können Profile mit Nutzer-spezifischen Parametern für unterschiedliche Getränke eingegeben und gespeichert werden, die dann automatisch bei der Herstellung eines Getränks berücksichtigt werden können.

Das Geschmacksmodul kann (ggf. zusätzlich zu einer Kapsel) eine Vielzahl von Patronen und/oder eine Multipatrone mit einer entsprechenden Vielzahl unterschiedlicher Zusatzstoffe umfassen. Die Parameter für die Herstellung des ersten Getränkes können Mengen für die Vielzahl von Zusatzstoffen anzeigen, die für die Herstellung des ersten Getränkes erforderlich sind. Das Steuermodul kann eingerichtet sein, zu veranlassen, dass über die Vielzahl von Patronen / über die Multipatrone die erforderlichen Mengen an Zusatzstoffen bereitgestellt werden. So kann die Flexibilität bei der Herstellung von unterschiedlichen Getränken weiter erhöht werden.

Gemäß einem Aspekt der Erfindung wird ein Kühlgerät mit einem Kühlraum zur Kühlung von Lebensmitteln beschrieben. Das Kühlgerät umfasst z.B. einen Kühlschrank, einen Gefrierschank, eine Gefriertruhe, einen Getränkeschrank, ein Kühlregal, etc. Insbesondere kann das Kühlgerät eingerichtet sein, in dem Kühlraum Getränke und andere Lebensmittel aufzunehmen. Das Kühlgerät umfasst ein Kühlmodul, das eingerichtet ist, den Kühlraum des Kühlgeräts zu kühlen. Typische Temperaturen im Kühlraum liegen dabei im Bereich von 10°C, 5°C, 0°C oder weniger. Das Kühlgerät kann z.B. einen Kompressor, ein thermoelektrisches Element und/oder einen Absorber umfassen. Des Weiteren umfasst das Kühlgerät eine in diesem Dokument beschriebene Getränkeeinheit zur Herstellung eines Getränks. Die Getränkeeinheit kann für die Herstellung eines Getränks das Kühlmodul des Kühlgeräts verwenden, so dass die Getränkeeinheit in Kosten- und Bauraum-effektiver Weise bereitgestellt werden kann. Mit der Getränkeeinheit können alkoholische und/oder nicht-alkoholische Getränke hergestellt werden.

Das Kühlmodul kann eingerichtet sein, die durch das zweite Bereitstellungsmodul bereitgestellte zweite Flüssigkeit auf eine Temperatur zu kühlen, die unterhalb des Gefrierpunkts von Wasser liegt. Dies ist besonders vorteilhaft, um auch ohne Zugabe von Eis alkoholische Getränke mit relativ tiefen Temperaturen (z.B. um ca. 0°C oder weniger) bereitzustellen.

Es ist zu beachten, dass die hierin beschriebenen Verfahren, Vorrichtungen und Systeme sowohl alleine als auch in Kombination mit anderen hierin beschriebenen Verfahren, Vorrichtungen und Systemen verwendet werden können. Des Weiteren können jegliche Aspekte der hierin beschriebenen Verfahren, Vorrichtung und Systeme in vielfältiger Weise miteinander kombiniert werden. Insbesondere können die Merkmale der Patentansprüche in vielfältiger Weise miteinander kombiniert werden.

Im Weiteren werden Ausführungsbeispiele der Erfindung anhand der Figuren der beigefügten Zeichnung näher beschrieben. Dabei zeigen:
- Figur 1: ein Blockdiagramm, welches das Prinzip der Herstellung eines Mischgetränks darstellt;
- Figur 2: beispielhafte Komponenten einer Getränkeeinheit zur Herstellung eines Mischgetränks;
- Figur 3: eine beispielhafte Ausgestaltung einer Getränkeeinheit zur Herstellung eines Mischgetränks; und
- Figur 4: ein Blockdiagramm eines Kühlgeräts mit einer Getränkeeinheit zur Herstellung eines Mischgetränks.

Wie eingangs dargelegt, befasst sich das vorliegende Dokument mit der effizienten Herstellung einer Vielzahl unterschiedlicher Mischgetränke in einem privaten Haushalt. Private Haushalte verfügen typischerweise über ein oder mehrere Kühl- bzw. Kältegeräte (z.B. einen Kühlschrank, einen temperierten Getränkeschrank, einen temperierten Weinschrank, einen Gefrierschrank, etc.). Ein solches Kühlgerät kann mit einer Getränkeeinheit versehen werden, die eingerichtet ist, eine Vielzahl unterschiedlicher Mischgetränke bereitzustellen. Insbesondere können alkoholische und nicht-alkoholische Getränke durch eine Getränkeeinheit, welche in ein Kältegerät integriert ist, bedarfsgerecht und portionsweise bereitgestellt werden. Durch die Integration einer Getränkeeinheit in ein Kühlgerät kann in effizienter Weise auf ein oder mehrere bereits vorhandene Temperierungsmodule des Kühlgeräts (insbesondere auf ein oder mehrere Kühlmodule) zurückgegriffen werden, wodurch eine Kosten-effektive Bereitstellung der Getränkeeinheit ermöglicht wird. Allerdings ist die vorliegende Offenbarung nicht auf die Integration einer Getränkeeinheit in ein vorgegebenes Kältegerät beschränkt. Gleichermaßen kann auch ein der Getränkeeinheit speziell und besonders angepasstes Kältegerät vorgesehen werden.

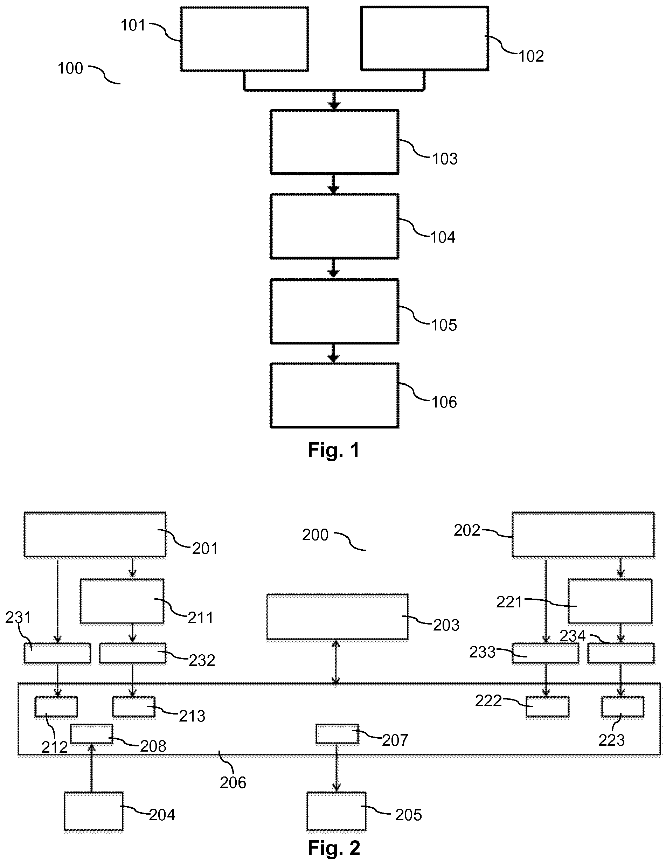

Fig. 1 stellt das Prinzip 100 der Herstellung eines Getränks durch eine Getränkeeinheit dar. In Behältern werden flüssige Grundkomponenten 101, 102 (d.h. Flüssigkeiten), insbesondere eine Wasser-basierte Komponente 101 (z.B. Trinkwasser) und eine Alkoholbasierte Komponente 102 (z.B. Ethanol oder geschmacksneutrale Alkoholika wie Wodka), bereitgestellt. Die flüssigen Grundkomponenten 101, 102 können temperiert, insbesondere gekühlt, werden (Referenzzeichen 103). Des Weiteren kann bei Bedarf Kohlensäure 104 zugeführt werden. Außerdem wird dem Getränk ein den besonderen Geschmack bildendes Konzentrat mit Zusatzstoffen 105 (z.B. in einem flüssigen und/oder in einem pulverförmigen Zustand) zugefügt. So kann auf Basis einer limitierten Anzahl flüssiger Grundkomponenten 101, 102 durch Verwendung von Konzentraten mit einer unterschiedlichen Kombination von Zusatzstoffen 105 eine Vielzahl unterschiedlicher Getränke hergestellt werden. Insbesondere können unterschiedliche Getränke bedarfsgerecht und portionsweise (z.B. auf Knopfdruck) zubereitet werden.

Die Getränke können dabei in verschiedenen Temperaturen ausgegeben und bei Bedarf mit Kohlensäure 104 und/oder Eis versetzt werden. Das Konzentrat/Rekombinat kann in Form einer handlichen Kapsel oder Kartusche in die Getränkeeinheit eingeführt werden. Diese Kapsel enthält sämtliche erforderlichen Inhaltsstoffe (auch als Zusatzstoffe 105 bezeichnet), wie Geschmacksstoffe, Farbstoffe und Schwebstoffe, um eine in Bezug auf die optische Wahrnehmung, den Geschmack und dem Mundgefühl optimierte "Nachbildung" eines alkoholischen oder nicht-alkoholischen Originalgetränks (z.B. Wein, Whisky, Cocktail, Saft oder Limonade) bereitzustellen.

Eine Kapsel mit den Zusatzstoffen 105 enthält die für eine Portion eines Getränks erforderliche Menge an Stoffen. Ergänzend kann die Getränkeeinheit eine Vielzahl von Patronen bzw. eine Multistoffpatrone mit unterschiedlichen Inhaltsstoffen umfassen. Die Getränkeeinheit kann dann je nach ausgewähltem Getränk bestimmte Mengen an Inhaltsstoffen aus der Kapsel 105 sowie einer Patrone oder mehreren Patronen entnehmen, um das ausgewählte Getränk zu erstellen. Leere Patronen können dann bei Bedarf aufgefüllt oder ausgetauscht werden.

Was in diesem Zusammenhang eine Portion ist, richtet sich nach der Art und der üblichen Bereitstellung des ersten Getränks an einen Konsumenten. Eine Portion Bier kann zwischen 0,2 l und 1,0 l, insbesondere 0,2l, 0,3 l, 0,5l oder 1,0 l betragen; eine Portion Rotwein oder Weißwein 0,1 l oder 0,2 l. Eine Portion Südwein wie Portwein oder Sherry mag 50 cl betragen, eine Portion Spirituose wie Likör, Obstbranntwein, Cognac oder Whisky 20 cl oder 40 cl.

Die Temperierung eines Getränks kann über ein oder mehrere Wärmetauscher erfolgen, welche an die Kältetechnik (d.h. an ein oder mehrere Kühlmodule) des Kältegerätes angeschlossen sind, in der sich die Getränkeeinheit befindet. Ggf. kann die Getränkeeinheit ein oder mehrere weitere Kühl- und/oder Heizelemente (z.B. Durchlaufkühler und -erhitzer) umfassen, um ein Getränk bzw. eine flüssige Grundkomponente 101, 102 auf eine gewünschte Temperatur zu bringen.

Fig. 2 zeigt ein Blockdiagramm mit beispielhaften Modulen einer Getränkeeinheit 200. Die Getränkeeinheit 200 weist einen ersten Behälter 201 für eine erste flüssige Grundkomponente 101 (z.B. Trinkwasser) auf. Alternativ oder ergänzend kann die Getränkeeinheit 200 direkt mit einer Leitung (z.B. mit einer Trinkwasserleitung) verbunden sein, um die erste Grundkomponente 101 bereitzustellen. Des Weiteren umfasst die Getränkeeinheit 200 einen zweiten Behälter 202 zur Aufnahme einer zweiten flüssigen Grundkomponente 202 (z.B. Alkohol). Die zweite Grundkomponente 202 kann z.B. durch austauschbare Behälter 202 bereitgestellt werden. Die Grundkomponenten bzw. Flüssigkeiten 101, 102 können durch die Kühlmodule des Kühlgeräts, in dem sich die Getränkeeinheit 200 ggf. befindet, auf eine jeweilige Basistemperatur 231, 233 gebracht werden. Des Weiteren kann die Getränkeeinheit 200 Temperierungsmodule 211, 221 umfassen, um die Grundkomponenten 101, 102 mit einer weiteren Temperatur 232, 234 (auch als Ergänzungstemperatur bezeichnet) bereitzustellen. Durch die Mischung von einer flüssigen Grundkomponente 101 mit der Basistemperatur 231 und mit der Ergänzungstemperatur 232 in unterschiedlichen Mischverhältnissen kann die flüssige Grundkomponente 101 in einer Vielzahl von unterschiedlichen Temperaturen (zwischen der Basistemperatur 231 und der Ergänzungstemperatur 232) bereitgestellt werden.

Ein Temperierungsmodul 211, 221 kann eingerichtet sein, eine flüssige Grundkomponente 101, 102 zu erwärmen bzw. zu erhitzen. Zu diesem Zweck kann ein Temperierungsmodul 211, 221 z.B. einen Durchlauferhitzer umfassen. Beispielsweise kann eine Grundkomponente 101 in einem gekühlten Zustand bevorratet werden. Insbesondere kann die Grundkomponente 101 durch ein Kühlmodul eines Kühlgerätes gekühlt werden und im gekühlten Zustand im Behälter 201 aufbewahrt werden. Die Grundkomponente 101 kann dann durch das Temperierungsmodul 211 erwärmt werden. So ist es möglich, in effizienter Weise eine Vielzahl von unterschiedlichen flüssigen Grundkomponenten 101, 102 bei gleicher Temperatur zu bevorraten und die Temperaturen der Grundkomponenten 101, 102 erst zum Mischen mittels der Temperierungsmodule 211, 221 anzupassen.

Über Ventile 212, 213, 222, 223 können unterschiedliche Mengen der unterschiedlich temperierten Grundkomponenten 101, 102 einem Mischbehälter 206 zugeführt werden. Des Weiteren kann über ein Ventil 208 dem Mischbehälter Kohlensäure 104 zugeführt werden. Bei den Ventilen kann es sich um Einwegventile handeln. Die Getränkeeinheit 200 umfasst ein oder mehrere Aktuatoren 203, die eingerichtet sind, die Zufuhr der verschiedenen Komponenten 101, 102, 104 zu dem Mischbehälter 206 zu bewirken. Beispielhafte Aktuatoren 203 sind z.B. Pumpen oder Elektromotoren.

Über ein Ausgangs-Ventil 207 kann das Grundgemisch aus Grundkomponenten 101 und 102 sowie ggf. Kohlensäure 104 (auch als Flüssigkeits-Gemisch bezeichnet) einem Geschmacksmodul 205 zugeführt werden. Das Geschmacksmodul 205 kann z.B. eine Kapsel mit Zusatzstoffen 105, insbesondere mit Geschmacks-, Farb- und/oder Schwebstoffen, enthalten, die für die Herstellung eines bestimmten Getränks erforderlich sind. Das Grundgemisch kann z.B. durch einen Aktuator 203 durch eine solche Kapsel gedrückt werden, so dass sich das Grundgemisch mit den Zusatzstoffen 105 vermengt, um das gewünschte Getränk bereitzustellen. Alternativ oder ergänzend kann das Geschmacksmodul 205 Mittel umfassen, durch die das Grundgemisch mit den Zusatzstoffen 105 vermischt wird (z.B. einen weiteren Mischbehälter).

Es sei darauf hingewiesen, dass der Mischbehälter 206 und das Geschmacksmodul 205 kombiniert werden können. Insbesondere kann die Mischung der Grundkomponenten 101, 102 und der Zusatzstoffe 105 in einem gemeinsamen Behälter erfolgen. Beispielsweise kann die Mischung direkt in einer Kapsel mit Zusatzstoffen 105 erfolgen. Alternativ kann ein speziell geformter Behälter zur Mischung verwendet werden.

Eine Kapsel mit Zusatzstoffen 105 weist bevorzugt eine Geometrie auf, die ein vollständiges Entleeren der Kapsel bei der Mischung mit dem Grundgemisch unterstützt. So kann eine gute Reproduzierbarkeit von Getränken erreicht werden. Beispielsweise kann die Kapsel Spritzen-förmig sein. Insbesondere kann die Kapsel eine Form aufweisen, die es ermöglicht, gemäß der Funktion einer Spritze, die Zusatzstoffe 105 aus der Kapsel mit dem Grundgemisch zu vermengen. Zum Beispiel können die Zusatzstoffe 105 durch einen Kolben nahezu vollständig aus der Kapsel in das Grundgemisch befördert werden.

Es wird somit eine in einem Kältegerät (z.B. für einen Haushalt oder für eine professionelle Umgebung) integrierte Getränkeeinheit 200 beschrieben, welche die bedarfsgerechte und portionsweise Zubereitung von einer Vielzahl von unterschiedlichen alkoholischen und nicht-alkoholischen Getränken ermöglicht. Kapseln können dabei die für den Geschmack und für das Mundgefühl erforderlichen Zusatzstoffe 105 enthalten. Diese Zusatzstoffe 105 können mit dem im Kältegerät gekühlten Wasser 101 und bei Bedarf mit Alkohol 102, Kohlensäure 104, Eis, etc. ergänzt werden. Damit können alkoholische Getränke wie z.B. Bier, Wein, Whisky, diverse Cocktails, etc. und nicht-alkoholische Getränke wie z.B. Saft, Limonade etc. in unterschiedlichen Geschmacksrichtungen portionsweise, bedarfsgerecht und auf Knopfdruck zubereitet werden.

Trinkwasser 101 kann durch einen Behälter 201 (Bevorratungssystem) und/oder durch einen Zulauf mit Frischwasseranschluss bereitgestellt werden. Der Behälter 201 bzw. das Zuführungssystem (allgemein als das erste Bereitstellungsmodul 201 bezeichnet) können im Kühlgerät integriert sein. Das Trinkwasser kann ggf. aufbereitet werden (z.B. durch einen Kohlefilter, einen Osmosefilter, etc.). Die Alkoholkomponente 102 (Ethanol oder andere Alkoholika) kann aus einem zweiten Behälter 202 (allgemein als das zweite Bereitstellungsmodul 202 bezeichnet) zugeführt werden. Der zweite Behälter 202 kann über einen integrierten Wärmetauscher zur Kühlung der Alkoholkomponente 102 verfügen. Alternativ kann der Behälter 202 im Kühl/Gefrierraum (z.B. in der Tür) des Kühlgeräts integriert sein, so dass die Kühlung der Alkoholkomponente 102 über die Behälterwand erfolgt. Die Alkoholkomponente 102 kann für weitere Funktionen, z.B. für die Säuberung und/oder Spülung der Getränkeeinheit 200, verwendet werden.

Die gewünschte Temperatur des zu erstellenden Getränkes kann über die Vermischung von unterschiedlich temperierten Flüssigkeiten (Wasser 101 und/oder Alkohol 102) eingestellt werden. Zur Einstellung von relativ tiefen Temperaturen eignet sich insbesondere die Alkoholkomponente 102 aufgrund des niedrigen Gefrierpunktes, da die Alkoholkomponente 102 auch im flüssigen Zustand unter den Gefrierpunk von Wasser gekühlt werden kann. Zu diesem Zweck kann sich der zweite Behälter 202 z.B. im Gefrierraum bzw. in der unmittelbaren Nähe eines Verdampfers des Kühlgeräts befinden. Auf die Temperatur der Flüssigkeiten 101, 102 kann sowohl einzeln als auch in einer fertigen Mischung eines Getränks eingewirkt werden (z.B. mittels Wärmetauscher, Kühlelement und/oder Heizelement). Zudem kann die Temperierung auch nach Abschluss des Mischprozesses direkt vor der Ausgabe des Getränkes erfolgen (z.B. unter Verwendung des Durchlaufkühlprinzips mittels Verdampfer, Wärmetauscher und/oder Eis).

Eine Kapsel oder Patrone enthält die für das jeweilige Getränk erforderlichen Zusatzstoffe 105 (Geschmack, Farbstoff, Füll- und Schwebstoffe, etc.). Ein Kapsel oder Patrone kann nach Gebrauch verworfen werden. Anstelle einer Kapsel kann ein Multistoffpatronensystem bzw. eine Vielzahl von Einzelpatronen verwendet werden, welche nach dem Prinzip von Kombipatronen bei Tintenstrahldruckern funktionieren und so eine Vielzahl von unterschiedlichen Getränken abbilden können. Es können dann die für unterschiedliche Getränke erforderlichen Mengen von Zusatzstoffen 105 aus den Patronen einem Mischer (z.B. dem Mischbehälter 206) zugeführt werden.

Je nach Getränk kann eine Zuführung von Kohlensäure 104 (z.B. für die Zubereitung von Bier) erforderlich sein. Die Zuführung von Kohlensäure 104 kann ggf. in einem zusätzlichen Mischmodul erfolgen. Alternativ kann eine Mischung mit Kohlensäure 104 direkt in oder an der Kapsel mit Zusatzstoffen 105 erfolgen.

Ein zu erstellendes Getränk wird durch ein Kapsel- bzw. Patronensystem definiert und nach Bedarf und portionsweise ausgegeben. Dabei kann über Informationen, die sich aus der Kapsel bzw. Patrone ergeben, die Menge der flüssigen Grundkomponenten 101, 102 und der Kohlensäure 104 gesteuert werden. Des Weiteren kann es einem Nutzer über eine Nutzerschnittstelle ermöglicht werden, Einfluss auf einzelne Parameter des zu erstellenden Getränkes zu nehmen. Beispielhafte Parameter für die Herstellung eines Getränkes sind die Temperatur, die Mengen und Mengenverteilungen z.B. in Bezug auf Zusatzstoffe, Alkohol, Wasser, etc.

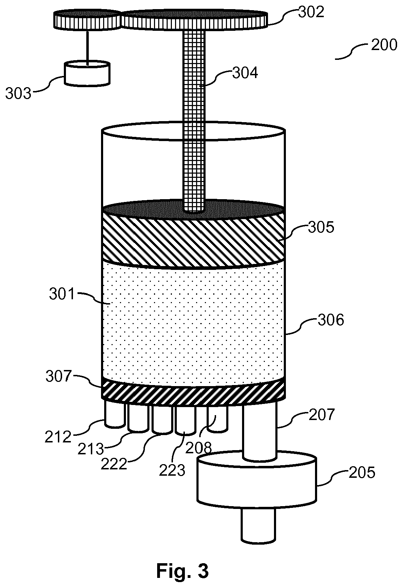

Fig. 3 zeigt einen beispielhaften Aufbau einer Getränkeeinheit 200. Die Getränkeeinheit 200 umfasst einen Zylinder 306 zur Erstellung eines Grundgemisches bzw. eines Flüssigkeits-Gemisches 301 aus einer Vielzahl von flüssigen Grundkomponenten 101, 102. Ein beweglicher Kolben 305 kann vom Boden 307 des Zylinders 306 weg bewegt werden, um über die Ventile 212, 213, 222, 223, 208 die Grundkomponenten 101, 102 und ggf. Kohlensäure 104 in den Innenraum des Zylinders 306 zu saugen. Die Bewegung des Kolbens 305 kann über eine Spindel 304, eine Spindelmutter 302, ein Getriebe und einen Elektromotor 303 erfolgen. Die Mengenverhältnisse an zugeführten Grundkomponenten 101, 102 bzw. an Kohlensäure 104 können über die Öffnungsweite der jeweiligen Ventile 212, 213, 222, 223, 208 eingestellt werden. Die Gesamtmenge an Grundgemisch 301 kann über den Hub des Kolbens 305 eingestellt werden.

Wenn eine ausreichende Menge an Grundgemisch 301 vorliegt, kann der Kolben 305 zum Boden 307 des Zylinders 306 hin bewegt werden, um das Grundgemisch 301 über das Ausgangs-Ventil 207 zu dem Geschmacksmodul 205 zu befördern. Am Ausgang des Geschmacksmoduls 205 kann dann das fertige Getränk bereitgestellt werden. Die in Fig. 3 dargestellte Getränkeeinheit 200 ermöglicht es, ein Mischgetränk in effizienter Weise anhand von nur einem Aktuator 203, 303 herzustellen.

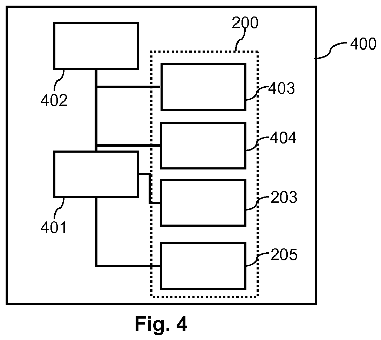

Fig. 4 zeigt ein Blockdiagramm eines beispielhaften Kühlgeräts 400. Das Kühlgerät 400 bzw. die Getränkeeinheit 200 umfassen ein Steuermodul 401, das eingerichtet ist, die Herstellung eines Getränks durch die Getränkeeinheit 200 zu steuern. Das Kühlgerät 400 kann eine Nutzerschnittstelle 402 umfassen, die es einem Nutzer ermöglicht, die Herstellung eines Getränks durch die Getränkeeinheit 200 zu veranlassen und/oder Parameter bezüglich der Herstellung eines Getränks einzustellen (z.B. eine gewünschte Temperatur bzw. eine bestimmte Zusammensetzung).

Wie bereits dargelegt, umfasst die Getränkeeinheit 200 ein oder mehrere Temperierungsmodule 403 (insbesondere Kühlmodule) zur Temperierung ein oder mehrerer Grundkomponenten 101, 102, des Grundgemischs 301 und/oder des fertigen Getränks. Die ein oder mehreren Temperierungsmodule 403 können zumindest teilweise durch bereits vorhandene Kühlmodule des Kühlgeräts 400 bereitgestellt werden. Des Weiteren umfasst die Getränkeeinheit 200 eine Vielzahl von Ventilen 404, durch die die zugeführte Menge an flüssigen Grundkomponenten 101,102 und die zugeführte Menge an Kohlensäure 104 gesteuert werden können. Außerdem umfasst die Getränkeeinheit 200 ein oder mehrere Aktuatoren 203, durch die das Grundgemisch 301 erstellt werden kann und/oder durch die das Grundgemisch 301 mit den Zusatzstoffen 105 vermischt werden kann.

Die Getränkeeinheit 200 umfasst ein Geschmacksmodul 205, das eingerichtet ist, die für ein Getränk erforderlichen Zusatzstoffe 105 bereitzustellen und mit dem Grundgemisch 301 zu vermengen. Die Zusatzstoffe 105 können z.B. durch eine Kapsel bereitstellt werden, die durch einen Nutzer in einen Kapselträger des Geschmacksmoduls 205 eingebracht werden kann. Das Geschmacksmodul 205 kann eingerichtet sein, Information bezüglich des zu erstellenden Getränks auf Basis der eingebrachten Kapsel zu ermitteln. Beispielsweise kann die Information anzeigen, welche Menge und Zusammensetzung an Grundgemisch 301 für die Erstellung eines Getränks erforderlich ist und/oder welche Temperierung erforderlich ist.

Das Steuermodul 401 kann eingerichtet sein:
- zu ermitteln, dass ein Getränk erstellt werden soll (z.B. aufgrund einer Eingabe über die Nutzerschnittstelle 402 und/oder aufgrund der Tatsache, dass eine Kapsel in das Geschmacksmodul 205 eingeführt wurde);
- die Parameter (insbesondere die Menge, Zusammensetzung und/oder Temperierung des Grundgemisches 301) des Getränks zu ermitteln (z.B. aufgrund einer Eingabe über die Nutzerschnittstelle 402 und/oder aufgrund der eingebrachten Kapsel); und
- die Temperierungsmodule 403, die Ventile 404 und/oder die Aktuatoren 203 zu veranlassen, das Getränk zu erstellen.

Die Kühlgeräte 400 können z.B. Getränkekühlgeräte für den Heimbereich und/oder den Hotelbereich umfassen. Die Getränkeeinheit 200 kann z.B. in die Tür eines Kühlschranks 400 integriert sein. Des Weiteren kann die Getränkeeinheit 200 z.B. in einem Kühlfach und/oder in einem Getränkeautomaten integriert sein. Des Weiteren ist die Integration der Getränkeeinheit 200 in eine Bar denkbar.

Die in diesem Dokument beschriebene Getränkeeinheit 200 für ein Kühlgerät 400 ermöglicht es, in effizienter Weise nach Bedarf eine Vielzahl unterschiedlicher Getränke herzustellen. So können der logistische Aufwand und die Kosten für die Bereitstellung unterschiedlicher Getränke reduziert werden. Insbesondere müssen für die unterschiedlichen Getränke keine Vielzahl an Flaschen gelagert oder transportiert werden, woraus sich ein geringerer Platzbedarf und ein geringerer Aufwand für Transport und Lagerung ergeben. Die beschriebene Getränkeeinheit 200 ermöglicht es, Getränke individuell in Bezug auf Geschmack, Mundgefühl, Textur, etc. anzupassen. Außerdem wird durch die portionsweise Bereitstellung der Verwurf von Getränken reduziert. Durch die Integration der Getränkeeinheit 200 in ein Kühlgerät 400 kann auf bereits vorhandene Kühltechnik zurückgegriffen werden, wodurch sich ein Kosten-effizientes System zur Herstellung von Getränken ergibt. Außerdem ermöglicht die beschriebene Getränkeeinheit 200 eine individuelle Anpassung von Getränken an die Bedürfnisse von unterschiedlichen Nutzern (z.B. die Möglichkeit zur Anreicherung der Getränke mit bestimmten Stoffen wie Mineralien, Vitaminen, etc.).

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Getränkeeinheit (200) zur Herstellung eines Getränks, wobei die Getränkeeinheit (200) umfasst:
- ein erstes Bereitstellungsmodul (201) zur Bereitstellung einer ersten Flüssigkeit (101);
- ein zweites Bereitstellungsmodul (202) zur Bereitstellung einer zweiten Flüssigkeit (102); wobei die zweite Flüssigkeit (102) Alkohol enthält;
- ein Geschmacksmodul (205) zur Bereitstellung von Zusatzstoffen (105); wobei das Geschmacksmodul (205) eingerichtet ist, eine erste Kapsel aufzunehmen, welche Zusatzstoffe (105) für eine Portion eines ersten Getränks umfasst;
- ein Steuermodul, das eingerichtet ist,
- Parameter für die Herstellung des ersten Getränkes zu ermitteln, wobei die Parameter eine erste Menge an erster Flüssigkeit (101) und eine zweite Menge an zweiter Flüssigkeit (102) anzeigen;
- zu veranlassen, dass durch das erste Bereitstellungsmodul (201) die erste Menge an erster Flüssigkeit (101) bereitgestellt wird;
- zu veranlassen, dass durch das zweite Bereitstellungsmodul (202) die zweite Menge an zweiter Flüssigkeit (102) bereitgestellt wird; und
- zu veranlassen, dass die erste Menge an erster Flüssigkeit (101) und die zweite Menge an zweiter Flüssigkeit (102) mit den Zusatzstoffen (105) aus der ersten Kapsel vermischt werden, um die Portion des ersten Getränks herzustellen,
**dadurch gekennzeichnet, dass**
- die Getränkeeinheit (200) einen Mischbehälter (206, 306) umfasst;
- das erste Bereitstellungsmodul (201) über ein oder mehrere erste Ventile (212, 213) mit dem Mischbehälter (206, 306) verbunden ist;
- das zweite Bereitstellungsmodul (202) über ein oder mehrere zweite Ventile (222, 223) mit dem Mischbehälter (206, 306) verbunden ist; und
- das Steuermodul eingerichtet ist,
- die ein oder mehreren ersten Ventile (212, 213) anzusteuern, um die erste Menge von der ersten Flüssigkeit (101) in dem Mischbehälter (206, 306) bereitzustellen; und
die ein oder mehreren zweiten Ventile (222, 223) anzusteuern, um die zweite Menge von der zweiten Flüssigkeit (102) in dem Mischbehälter (206, 306) bereitzustellen.

2. Getränkeeinheit (200) gemäß Anspruch 1, wobei die Getränkeeinheit (200) eingerichtet ist, die zweite Flüssigkeit (102) für eine Säuberung und/oder Spülung der Getränkeeinheit (200) zu verwenden.

3. Getränkeeinheit (200) gemäß einem der vorhergehenden Ansprüche, wobei
- die erste Kapsel ein Informationsmittel umfasst, das Information bezüglich des ersten Getränks anzeigt, welches mit der ersten Kapsel hergestellt werden kann; und
- das Steuermodul eingerichtet ist, die Parameter für die Herstellung des ersten Getränkes auf Basis der Informationsmittel zu ermitteln.

4. Getränkeeinheit (200) gemäß Anspruch 3, wobei das Informationsmittel ein oder mehrere umfasst von: einen maschinenlesbaren Code auf der ersten Kapsel, eine Farbe der ersten Kapsel, eine Form der ersten Kapsel, und/oder eine Identifikationsnummer auf der ersten Kapsel.

5. Getränkeeinheit (200) gemäß einem der vorhergehenden Ansprüche, wobei
- die Getränkeeinheit (200) ein Austritts-Ventil (207) umfasst, das den Mischbehälter (206, 306) mit dem Geschmacksmodul (205) verbindet; und
- die Getränkeeinheit (200) einen Aktuator (203, 303) umfasst, der eingerichtet ist, ein Flüssigkeits-Gemisch (301) aus dem Mischbehälter (206, 306) durch das Austritts-Ventil (207) zum Geschmacksmodul (205) zu befördern.

6. Getränkeeinheit (200) gemäß Anspruch 5, wobei
- der Mischbehälter (206, 306) einen beweglichen Kolben (305) umfasst, durch den ein Volumen des Mischbehälters (206, 306) vergrößert bzw. verkleinert werden kann;
- die ein oder mehreren ersten Ventile (212, 213) derart angeordnet sind, dass durch die ein oder mehreren ersten Ventile (212, 213) die erste Flüssigkeit (101) in den Mischbehälter (206, 306) gesogen wird, wenn durch den Kolben (305) das Volumen des Mischbehälters (206, 306) vergrößert wird;
- die ein oder mehreren zweiten Ventile (222, 223) derart angeordnet sind, dass durch die ein oder mehreren zweiten Ventile (222, 223) die zweite Flüssigkeit (102) in den Mischbehälter (206, 306) gesogen wird, wenn durch den Kolben (305) das Volumen des Mischbehälters (206, 306) vergrößert wird; und
- das Austritts-Ventil (207) derart angeordnet ist, dass durch das Austritts-Ventil (207) das Flüssigkeits-Gemisch (301) aus dem Mischbehälter gedrückt wird, wenn durch den Kolben (305) das Volumen des Mischbehälters (206, 306) verkleinert wird.

7. Getränkeeinheit (200) gemäß einem der vorhergehenden Ansprüche, wobei
- die Getränkeeinheit (200) zumindest ein Temperierungsmodul (221) zur Temperierung der zweiten Flüssigkeit (102) umfasst; und
- das Temperierungsmodul (221) eingerichtet ist, die zweite Flüssigkeit (102) derart zu kühlen, dass sich die zweite Flüssigkeit (102) im flüssigen Zustand befindet und eine Temperatur aufweist, die unterhalb des Gefrierpunkts von Wasser liegt.

8. Getränkeeinheit (200) gemäß einem der vorhergehenden Ansprüche, wobei die Getränkeeinheit (200) eine Nutzerschnittstelle umfasst, die es einem Nutzer ermöglicht, die zweite Menge an zweiter Flüssigkeit (102) für das erste Getränk einzustellen.

9. Kühlgerät (400), wobei das Kühlgerät (400) umfasst,
- ein Kühlmodul (403), das eingerichtet ist, einen Kühlraum des Kühlgeräts (400) zu kühlen; und
- eine Getränkeeinheit (200) gemäß einem der vorhergehenden Ansprüche.

## Claims

1. Beverage unit (200) for producing a beverage, wherein the beverage unit (200) comprises:
- first provision module (201) for providing a first liquid (101);
- a second provision module (202) for providing a second liquid (102); wherein the second liquid (102) contains alcohol;
- a taste module (205) for providing additives (105); wherein the taste module (205) is designed to hold a first capsule, which contains additives (105) for a portion of a first beverage;
- a control module, which is designed,
- to determine parameters for producing the first beverage, wherein the parameters indicate a first quantity of first liquid (101) and a second quantity of second liquid (102);
- to prompt the first provision module (201) to provide the first quantity of first liquid (101);
- to prompt the second provision module (202) to provide the second quantity of second liquid (102); and
- to prompt the mixing of the first quantity of first liquid (101) and the second quantity of second liquid (102) with the additives (105) from the first capsule, in order to produce the portion of the first beverage,
**characterised in that**
- the beverage unit (200) comprises a mixing container (206, 306);
- the first provision module (201) is connected to the mixing container (206, 306) by way of one or more first valves (212, 213);
- the second provision module (202) is connected to the mixing container (206, 306) by way of one or more second valves (222, 223); and
- the control module is designed
- to activate the one or more first valves (212, 213) to provide the first quantity of the first liquid (101) in the mixing container (206, 306); and
- to activate the one or more second valves (222, 223) to provide the second quantity of the second liquid (102) in the mixing container (206, 306).

2. Beverage unit (200) according to claim 1, wherein the beverage unit (200) is designed to use the second liquid (102) to clean and/or rinse the beverage unit (200).

3. Beverage unit (200) according to one of the preceding claims, wherein
- the first capsule comprises an information tool showing information about the first beverage that can be produced with the first capsule; and
- the control module is designed to determine the parameters for producing the first beverage based on the information tool.

4. Beverage unit (200) according to claim 3, wherein the information tool comprises one or more of: a machine-readable code on the first capsule, a colour of the first capsule, a shape of the first capsule and/or an identification number on the first capsule.

5. Beverage unit (200) according to one of the preceding claims, wherein
- the beverage unit (200) comprises an outlet valve (207) connecting the mixing container (206, 306) to the taste module (205); and
- the beverage unit (200) comprises an actuator (203, 303), which is designed to convey a liquid mixture (301) from the mixing container (206, 306) through the outlet valve (207) to the taste module (205).

6. Beverage unit (200) according to claim 5, wherein
- the mixing container (206, 306) comprises a movable piston (305), which can enlarge or reduce a volume of the mixing container (206, 306);
- the one or more first valves (212, 213) are arranged in such a manner that the first liquid (101) is drawn into the mixing container (206, 306) through the one or more first valves (212, 213) when the volume of the mixing container (206, 306) is enlarged by the piston (305);
- the one or more second valves (222, 223) are arranged in such a manner that the second liquid (102) is drawn into the mixing container (206, 306) through the one or more second valves (222, 223) when the volume of the mixing container (206, 306) is enlarged by the piston (305); and
- the outlet valve (207) is arranged in such a manner that the liquid mixture (301) is pushed out of the mixing container through the outlet valve (207) when the volume of the mixing container (206, 306) is reduced by the piston (305).

7. Beverage unit (200) according to one of the preceding claims, wherein
- the beverage unit (200) comprises at least one temperature-control module (221) for controlling the temperature of the second liquid (102); and
- the temperature-control module (221) is designed to cool the second liquid (102) in such a manner that the second liquid (102) is in the liquid state and its temperature is below the freezing point of water.

8. Beverage unit (200) according to one of the preceding claims, wherein the beverage unit (200) comprises a user interface that allows a user to set the second quantity of second liquid (102) for the first beverage.

9. Refrigeration appliance (400), wherein the refrigeration appliance (400) comprises
- a refrigeration module (403), which is designed to cool a refrigeration chamber of the refrigeration appliance (400); and
- a beverage unit (200) according to one of the preceding claims.

## Revendications

1. Unité de boissons (200) destinée à la réalisation d'une boisson, l'unité de boissons (200) comprenant :
- un premier module d'approvisionnement (201) pour l'approvisionnement d'un premier liquide (101) ;
- un deuxième module d'approvisionnement (202) pour l'approvisionnement d'un deuxième liquide (102) ; le deuxième liquide (102) contenant de l'alcool ;
- un module de sapidité (205) pour fournir des additifs (105) ; le module de sapidité (205) étant configuré pour loger une première capsule, laquelle comprend des additifs (105) pour une portion d'une première boisson ;
- un module de commande qui est configuré
- pour déterminer des paramètres pour la réalisation de la première boisson, les paramètre indiquant une première quantité de premier liquide (101) et une deuxième quantité de deuxième liquide (102) ;
- pour inciter à ce que la première quantité de premier liquide (101) soit fournie par le premier module d'approvisionnement (201) ;
- pour inciter à ce que la deuxième quantité de deuxième liquide (102) soit fournie par le deuxième module d'approvisionnement (202) ; et
- pour inciter que la première quantité de premier liquide (101) et la deuxième quantité de deuxième liquide (102) soient mélangées aux additifs (105) provenant de la première capsule afin de réaliser la portion de la première boisson,
**caractérisée en ce que**
- l'unité de boissons (200) comprend un réservoir de mélange (206 ; 306) ;
- le premier module d'approvisionnement (201) est relié au réservoir de mélange (206, 306) par l'intermédiaire d'une ou de plusieurs premières vannes (212, 213) ;
- le deuxième module d'approvisionnement (202) est relié au réservoir de mélange (206, 306) par l'intermédiaire d'une ou de plusieurs deuxièmes vannes (222, 223) ; et **en ce que**
- le module de commande est configuré
- pour commander une ou les plusieurs premières vannes (212, 213) afin d'approvisionner la première quantité du premier liquide (101) dans le réservoir de mélange (206, 306) ; et
- pour commander une ou les plusieurs deuxièmes vannes (222, 223) afin d'approvisionner la deuxième quantité du deuxième liquide (102) dans le réservoir de mélange (206, 306).

2. Unité de boissons (200) selon la revendication 1, l'unité de boissons (200) étant configurée pour utiliser le deuxième liquide (102) pour un nettoyage et/ou rinçage de l'unité de boissons (200).

3. Unité de boissons (200) selon l'une quelconque des revendications précédentes,
- la première capsule contenant un moyen d'information qui indique des informations concernant la première boisson pouvant être réalisée avec la première capsule ; et
- le module de commande étant configuré pour déterminer les paramètres pour la réalisation de la première boisson sur la base des moyens d'information.

4. Unité de boissons (200) selon la revendication 3, le moyen d'information comprenant un/une ou plusieurs parmi : un code lisible par machine sur la première capsule, une couleur de la première capsule, une forme de la première capsule, et/ou un numéro d'identification sur la première capsule.

5. Unité de boissons (200) selon l'une quelconque des revendications précédentes,
- l'unité de boissons (200) comprenant une vanne de sortie (207) qui relie le réservoir de mélange (206, 306) au module de sapidité (205) ; et
- l'unité de boissons (200) comprenant un actionneur (203, 303) qui est configuré pour transporter un mélange de boissons (301) vers le module de sapidité (205) à travers la vanne de sortie (207) à partir du réservoir de mélange (206, 306).

6. Unité de boissons (200) selon la revendication 5,
- le réservoir de mélange (206, 306) comprenant un piston (305) déplaçable au moyen duquel un volume du réservoir de mélange (206, 306) peut être augmenté resp. diminué ;
- la ou les plusieurs premières vannes (212, 213) étant disposées de manière à ce que le premier liquide (101) soit aspiré dans le réservoir de mélange (206, 306) au moyen de la ou des plusieurs premières vannes (212, 213) lorsque le volume du réservoir de mélange (206, 306) est augmenté au moyen du piston (305) ;
- la ou les plusieurs deuxièmes vannes (222, 223) étant disposées de manière à ce que le deuxième liquide (102) soit aspiré dans le réservoir de mélange (206, 306) au moyen de la ou des plusieurs deuxièmes vannes (222, 223) lorsque le volume du réservoir de mélange (206, 306) est augmenté au moyen du piston (305) ; et
- la vanne de sortie (207) étant disposée de manière à ce que le mélange de boissons (301) soit pressé hors du réservoir de mélange au moyen de la vanne de sortie (207) lorsque le volume du réservoir de mélange (206, 306) est diminué au moyen du piston (305).

7. Unité de boissons (200) selon l'une quelconque des revendications précédentes,
- l'unité de boissons (200) comprenant au moins un module de régulation de température (221) pour la régulation de température du deuxième liquide (102) ; et
- le module de régulation de température (221) étant configuré pour refroidir le deuxième liquide (102) de manière à ce que le deuxième liquide (102) se trouve en état liquide et présente une température qui soit située en dessous du point de congélation de l'eau.

8. Unité de boissons (200) selon l'une quelconque des revendications précédentes, l'unité de boissons (200) comprenant une interface utilisateur qui permet à un utilisateur de régler la deuxième quantité de deuxième liquide (102) pour la première boisson.

9. Appareil frigorifique (400), l'appareil frigorifique (400) comprenant
- un module de réfrigération (403) qui est configuré pour réfrigérer un espace de réfrigération de l'appareil frigorifique (400) ; et
- une unité de boissons (200) selon l'une quelconque des revendications précédentes.
